# EUROPEAN PATENT SPECIFICATION

(11) **EP 2 572 025 B1**
(45) Date of publication and mention of the grant of the patent: **16.04.2014**
(21) Application number: 11719283.1
(22) Date of filing: 16.05.2011
(51) Int. Cl.: D06F 37/22, D06F 37/06

(54) **A WASHING MACHINE WHEREIN THE UNBALANCED LOAD IS BALANCED**
WASCHMASCHINE WORIN UNWUCHT IST AUSGEGLICHEN
LAVE-LINGE DANS LEQUEL LA CHARGE DESEQUILIBREE EST EQUIBREE

(30) Priority: 20.05.2010 TR 201004003
(43) Date of publication of application: 27.03.2013
(73) Proprietor: Arçelik Anonim Sirketi, 34950 Istanbul (TR)
(72) Inventor: HASANREISOGLU, Ali Levent, 34950 Istanbul (TR)
(86) International application number: PCT/EP2011/057858
(87) International publication number: WO 2011/144559

(56) References cited:
- EP-A2- 1 693 500
- WO-A1-2008/125498
- JP-A- 2002 136 792

## Description

The present invention relates to a washing machine wherein the unbalanced load inside the drum is balanced by using water.

In washing machines having drums rotating around the horizontal axis, in different steps of the washing program, the washing process is performed by the drum being rotated at different speeds. While the drum is being rotated, an uneven load distribution occurs as a result of the laundry piling up at some areas. Especially in the spin-drying step wherein the drum is rotated at high speeds, the unbalanced load resulting from the laundry and structural factors increases vibration and noise, and cause the washing machine to wear out. Furthermore, the spin-drying performance of the washing machine is adversely affected.

In the state of the art, various solutions have been developed for balancing the unbalanced load. Connecting balancing weights produced from heavy materials such as concrete or metal to the tub of the washing machine is a commonly used method. Since the balancing weights make the transportation of the washing machine difficult, water is used to realize the balancing operation in some embodiments. Water is filled into the balancing chambers formed on the tub or the drum in order to balance the detected unbalanced load, and emptied when the unbalanced load is eliminated. Using water to balance the unbalanced load also causes some problems. Particularly, since a significant number of materials and sealing elements should be used in order to transfer water to the regions where balancing will be performed, cost increases, moreover since elements used covers much space inside the washing machine, laundry capacity may decrease. In the state of the art embodiments, water taken from the outside for the balancing operation is generally transferred to the chambers on the drum baffles by being passed through the hub of the drum and the tub where the shaft rotating the drum is supported. Water taken from the mains is delivered to the slots between the sealing elements placed in a sequence at the hub portion wherein the shaft is supported. If the number of baffles on the drum is (n) and if separate balancing process should be performed at front and rear chambers of the baffles, for (2n) front and rear balancing chambers, (2n) slots and (2n+1) sealing elements are needed. For example, since there are a total of 6 front and rear balancing chambers in the washing machine having a drum with 3 baffles, 6 slots and 7 sealing elements are needed to be used in order to deliver water to each balancing chamber, thereby cost increases and slots and sealing elements occupy much space, increase in the number of the sealing elements produced in highly fine tolerances increases cost and volume in the drum into which the laundry is placed decreases.

In state of the art Japanese Patent Application No. JP2002136792, an additional grooved element is described which bears against the shaft bearing and which provides water to be transferred to the baffles on the drum by being directed when there is unbalanced load. This additional element does not rotate and the water in the groove is delivered to the water storage tanks while the shaft bearing rotates by means of a channel.

In the state of the art International Patent Application No. WO2008/125498, delivering water to the baffles in the drum over the bearing wherein the drum shaft is supported for balancing is explained.

The aim of the present invention is the realization of a washing machine wherein the unbalanced load in the drum is precisely balanced by using water.

The washing machine realized in order to attain the aim of the present invention, explicated in the first claim and the respective claims thereof comprises the balancing chambers disposed in the drum baffles at the front and the rear sides, into which water is delivered in order to balance the unbalanced load occurred in the drum and the sealing gaskets and the slots which provide water to be distributed to the balancing chambers from the hub parts of the tub and the drum, and water taken from the outside for the balancing process is first delivered to the slots and then to the balancing chambers corresponding to each slot. Each slot is connected to a single drum baffle and each slot is separated into two divisions by a separator. Each division that the separator separates in the slot is connected to a balancing chamber disposed at the drum baffle and water is delivered from each division in the slot to the balancing chamber that the said division is connected to almost independently from the other division.

The separator is fixed to the inner surface of the housing which is a part of the drum surrounding the tub hub and the slots so as to completely surround the slot and concentrically rotates around the same axis together with the drum, the housing, the gaskets and the slots. The gaskets rotate around the tub hub and by rubbing the tub hub in order to provide leak-proofing. On the other hand, the separators, contrary to the gaskets, rotate around the drum hub without contacting the drum hub. Therefore, the separators are not needed to be produced from a friction resistant and expensive material like the gaskets.

The separator comprises a ring-shaped rim which is fixed to the inner surface of the housing completely surrounding the slots, which surrounds the divisions and which rotates around the slot together with the housing and a ring-shaped extension which is connected to the inner surface of the rim, which extends towards between the water inlet lines opening to the slot by passing through the slot from outside towards the inside in the radial direction and thus which divides the slot from almost the middle thereof in the radial direction into the divisions.

The separator, furthermore, comprises two orifices which are disposed on the rim, which overlap the distribution lines delivering water to the balancing chambers and rotate together with the distribution lines, the slot, the rim and the extension, which provide water applying pressure onto the inner surface of the rim by the effect of the centrifugal force to reach the distribution lines by passing through the rim in the radial direction.

In an embodiment of the present invention, the separator has blades which extend into the divisions from both sides of the extension at the inner side of the rim, which rotates together with the rim and which increase the centrifugal force affecting onto water directing onto the inner surface of the rim surrounding the division during the rotational movement. The blades extend flatly or curvedly at the inner side of the separator towards the inner surface of the rim. The effect of the curved blades to increase the centrifugal force affecting onto water delivered to the balancing chambers from the divisions is larger than the flat blades.

In another embodiment of the present invention, the separator comprises two channels which are disposed between the blades and the inner surface of the rim at both sides of the extension facing the divisions, which extend all around the inner surface of the rim and facilitates the transfer of the water along the inner surface of the rim.

In another embodiment of the present invention, the separator comprises a groove which extends all around the outer surface of the rim and which, by means of an o-ring mounted thereon, provides the separator to be attached to the inner surface of the housing in a leak-proof manner at the same level with the slots.

In the washing machine of the present invention, in case of an unbalanced load, water in an amount that compensates the unbalanced load and decreases the effect to minimum is taken from the mains and delivered to the slots between the gaskets placed at the hub part where the shaft rotating the drum is supported and transferred to the balancing chambers on the baffles from the slots. By means of the separator connected to each slot, two chambers in one blade are supplied from two different divisions in a single slot, thus a single slot serves as two separate slots, two balancing chambers in a drum baffle are supplied almost independently from each other from separate divisions in a single slot, thereby number of slots decreases. Accordingly, saving is provided by decreasing the number of the costly gaskets which are produced in fine tolerances. Moreover, by decreasing the space that the gasket-slot structure occupies, the laundry loading capacity of the drum is increased.

The washing machine realized in order to attain the aim of the present invention is illustrated in the attached figures, where:

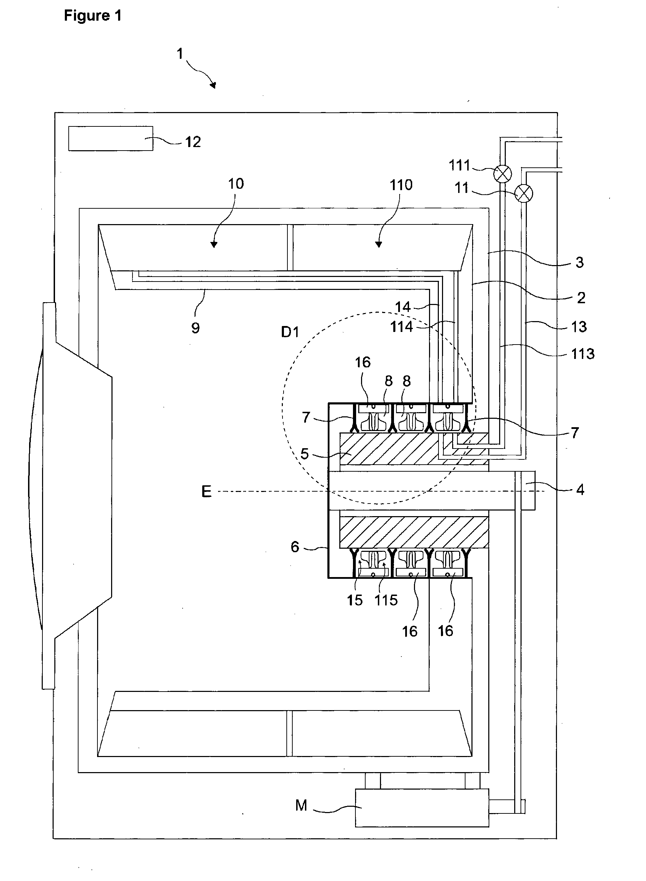

Figure 1 - is the schematic view of a washing machine.

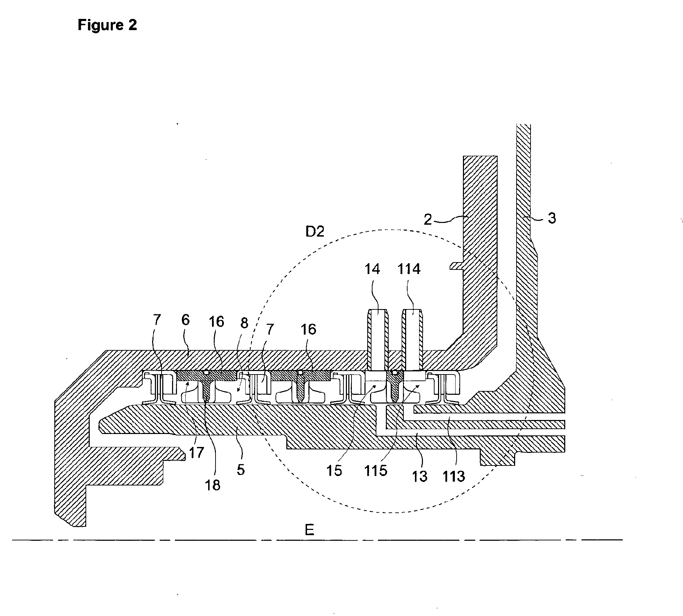

Figure 2 - is the view of detail D1 in Figure 1.
Figure 3 - is the view of detail D2 in Figure 2.
Figure 4 - is the perspective view of a separator.
Figure 5 - is the perspective view of a separator at the inner side of which curved blades are disposed.
Figure 6 - is the perspective view of a separator comprising flat blades.

The elements illustrated in the figures are numbered as follows:
1. Washing machine
2. Drum
3. Tub
4. Shaft
5. Hub
6. Housing
7. Gasket
8. Slot
9. Drum baffle
10. 110 Chamber
11. , 111 Water inlet valve
12. Control unit
13. 113, Water inlet line
14. , 114 Water distribution line
15. , 115 Division
16. Separator
17. Rim
18. Extension
19. , 119 Orifice
20. Blade
21. Channel
22. Groove

The washing machine (1) comprises a drum (2) rotated by a motor (M) around the horizontal axis (E), wherein the laundry is placed, a tub (3) wherein the drum (2) moves, a shaft (4) that transfers the movement received from the motor (M) to the drum (2), a hub (5) disposed at the center of the rear wall of the tub (3), which is stationary together with the tub (3) and wherein the shaft (4) is supported, a cylindrical housing (6) disposed at the center of the rear wall of the drum (2), surrounding the hub (5) concentrically and rotating together with the drum (2), more than one ring-shaped gasket (7) placed between the cylindrical inner surface of the housing (6) and the cylindrical outer surface of the hub (5), arranged one after the other and in parallel to each other, the outer edges of which are secured to the inner surface of the housing (6), rotating together with the housing (6) and the inner edges of which contact the cylindrical outer surface of the hub (5) so as to rotate around the hub (5) by rubbing against it, more than one slot (8) disposed between the gaskets (7) and arranged one after the other and in parallel to each to other between the housing (6) and the hub (5), at least one drum baffle (9) disposed at the inner surface of the drum (2), which provides the tumbling of the laundry, more than one chamber (10, 110) placed in the drum baffle (9) and wherein water is delivered according to the unbalanced load status, more than one water inlet valve (11, 111) which provides water to be delivered in necessary amount to the chambers (10, 110) from the water mains for the balancing process, a control unit (12) which opens/closes the water inlet valves (11, 111) by determining the amount and position of the unbalanced load when unbalanced load is detected and which determines how much water should be delivered into which drum baffle (9) and chamber (10, 110).

The washing machine (1) of the present invention comprises
- at least two water inlet lines (13, 113) opening into the slot (8) by passing through the hub (5) and which are stationary together with the tub (3), one end of each thereof connected to the water inlet valves (11, 111) and the other ends to the slot (8),
- at least two water distribution lines (14, 114), one end of each thereof connected to the slot (8) and the other ends to the chambers (10, 110) and which provide water to be delivered from the slot (8) to the chambers (10, 110),
   and
- at least one separator (16) which is placed between the two gaskets (7), which extends into the slot (8), which separates the slot (8) into at least two divisions (15, 115), which provides water received from the first water inlet line (13) to be delivered to the first division (15) and from there to the first water distribution line (14) and water received from the second water inlet line (113) to be delivered to the second division (115) and from there to the second water distribution line (114) and thereby which provides the chambers (10, 110) to be supplied from separate divisions (15, 115) in the same slot (8) almost independently from each other.

In the washing process in the washing machine (1), the control unit (12) detects the unbalanced load in the drum (2) and controls the operation of the water inlet valves (11, 111). The control unit (12) delivers water through the first water inlet line (13) by opening the first water inlet valve (11) upon detecting unbalance in the first chamber (10), water coming to the slot (8) fills only into the first division (15) by means of the separator (16) and is delivered to the first water distribution line (14) and from there to the first chamber (10) by means of the centrifugal force. The control unit (12) delivers water through the second water inlet line (113) by opening the second water inlet valve (111) upon detecting unbalance in the second chamber (110), water coming to the slot (8) fills only into the second division (115) by means of the separator (16) and is delivered to the second water distribution line (114) and from there to the second chamber (110) by means of the centrifugal force. A single slot (8) serves as two separate slots (8) by means of the separator (16), the separator (16) almost completely prevents the water passage from one division (15, 115) to the other division (15, 115) and water can be separately delivered to two chambers (10, 110) from each slot (8) by means of the divisions (15, 115).

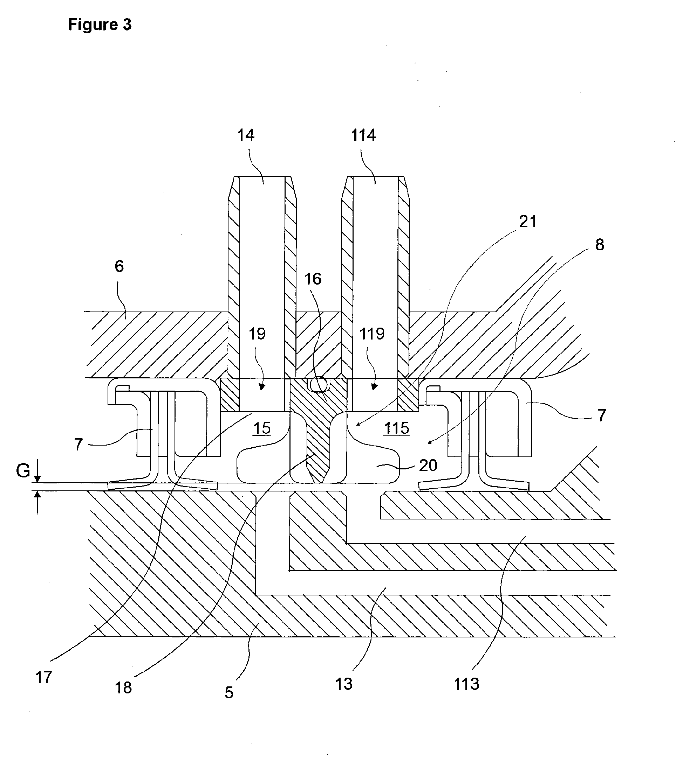

The separator (16) comprises a ring-shaped rim (17) which is fixed to the cylindrical inner surface of the housing (6) between the gaskets (7) and which rotates together with the housing (6) and a ring-shaped extension (18) which is connected to the inner surface of the rim (17) and which extends, in the radial direction, towards between the water inlet lines (13, 113) opening to the slot (8) such that a gap (G) remains between the cylindrical outer surface of the hub (5) and the extension (18) (Figure 3).

The gaskets (7) compressively contact the cylindrical outer surface of the hub (5) and rotate by rubbing in order to provide leak-proofing between the slots (8). Therefore, the gasket (7) is produced from a friction resistant and expensive material. The separator (16), on the other hand, is produced from a non-friction resistant and low-cost material since the extension (18) rotates without contacting the cylindrical outer surface of the hub (5). Since the separator (16) does not contact the outer surface of the hub (5), a small amount of water may pass from one division (15, 115) to the other division (15, 115) through the gap (G) between the separator (16) and the outer surface of the hub (5), however, water passing from one division (15, 115) to the other division (15, 115) is in a negligible amount and does not have any adverse effect on the balancing process.

The separator (16), furthermore, comprises at least two orifices (19, 119) which are disposed on the rim (17), which overlap with the water distribution lines (14, 114) and which rotate together with the housing (6) and the water distribution lines (14, 114), which provide water sticking onto the inner surface of the rim (17) by the effect of the centrifugal force to reach the water distribution lines (14, 114) by passing through the rim (17) in the radial direction (Figure 3, Figure 4, Figure 5, Figure 6).

Water coming from the water inlet line (13, 113) to the slot (8) and filling into the division (15, 115) that the separator (16) separates in the slot (8) sticks onto the inner surface of the rim (17) by the effect of the centrifugal force and reaches the water distribution line (14, 114) by means of the orifice (19, 119) from the inner surface of the rim (17) and then to the chamber (10, 110).

When the washing machine (1) is operated, the drum baffles (9), the housing (6), the gaskets (7), the slots (8), the distribution lines (14, 114) and the separators (16) rotate together with the drum (2) around the horizontal axis (E). The gaskets (7) contact the hub (5), but the separators (16) do not contact the hub (5). When the unbalanced load is detected by the control unit (12), the amount and the position of the unbalanced load and to which chamber (10, 110) in which baffle (9) water should be delivered is determined, then first necessary amount of water is taken from the water mains by operating the water inlet valves (11, 111) and water is delivered by means of the water inlet lines (13, 113) to the division (15, 115) in connection with the chamber (10, 110) wherein the unbalance is detected. Water reaching the related division (15, 115) reaches the related chamber (10, 110) by means of the related orifice (19, 119) and the related water distribution line (14, 114) without passing to the other division (15, 115) in the same slot (8) or by passing in a small amount through the gap (G) by means of the separator (16).

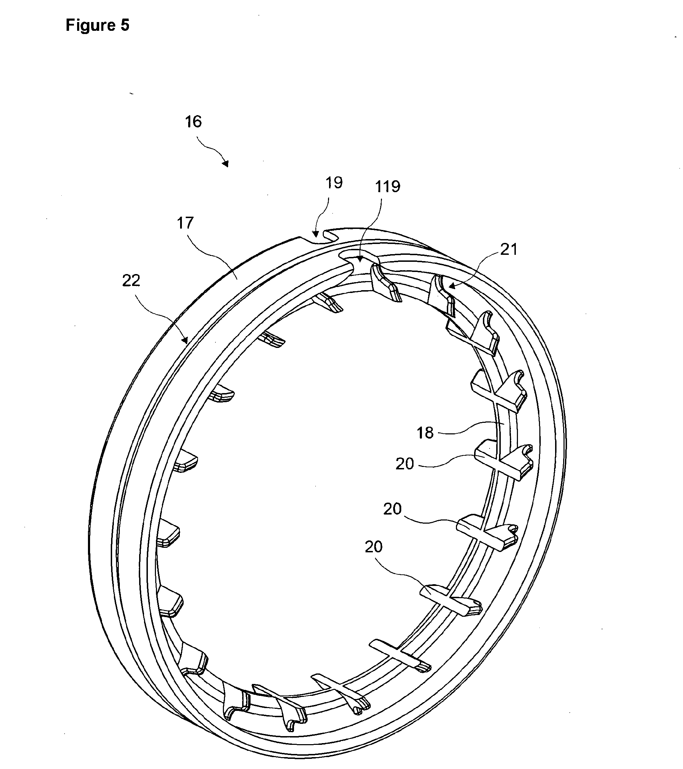

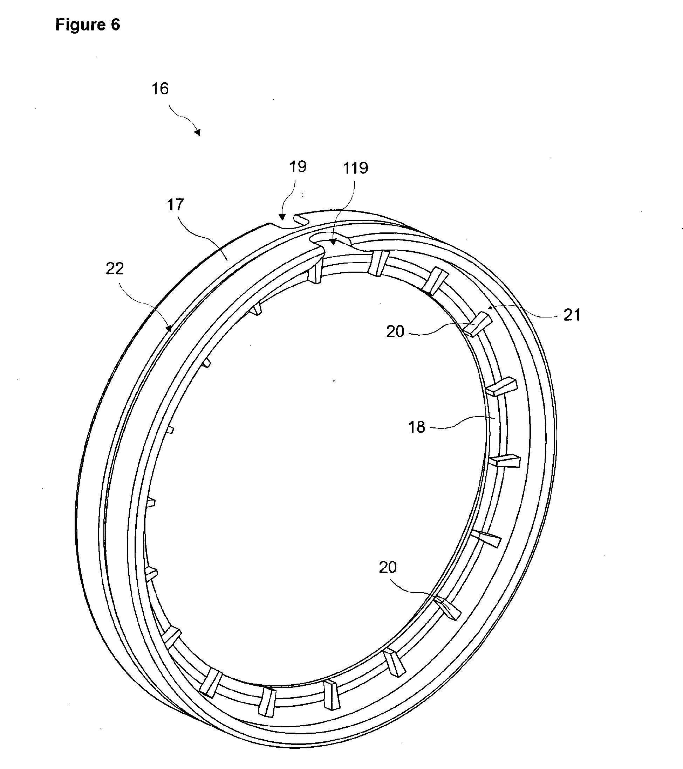

In an embodiment of the present invention, the separator (16) comprises more than one blade (20) which is connected to the extension (18) in the inner side of the rim (17), which extends into the divisions (15, 115) from both sides of the extension (18), which rotates together with the rim (17) and the extension (18), which increase the speed of water delivered to the water distribution line (14, 114) from the division (15, 115) by increasing the centrifugal force affecting water heading toward the inner surface of the rim (17) during the rotational movement (Figure 5, Figure 6).

In another embodiment of the present invention, the blades (20) extend towards the inner surface of the rim (17) in the radial direction at both sides of the extension (18) (Figure 6).

In another embodiment of the present invention, the blades (20) extend towards the inner surface of the rim (17) in a curved manner in comparison with the radial direction at both sides of the extension (18) (Figure 5). The curved blades (20) provide water to be delivered at an increased speed to the inner surface of the rim (17) and to the water distribution line (14, 114) by means of the orifice (19, 119) by increasing the centrifugal force affecting water in the divisions (15, 115) more than the flat blades (20).

In another embodiment of the present invention, the separator (16) comprises two channels (21) which are formed by cutting-out the portions of the blades (20) near the inner surface of the rim (17) or by producing the blades (20) in recessed form at both sides of the extension (18), which extend all around the inner surface of the rim (17) and which provide water in the division (15, 115) during the rotational movement and the effect of the centrifugal force thereon of which is increased by the blades (20) to reach the orifice (19, 119) on the inner surface of the rim (17) (Figure 3, Figure 5).

Water reaching the division (15, 115) through the water inlet line (13, 113) continues its movement in the radial direction and first reaches the blades (20) disposed in the division (15, 115) and then to the channel (21). Water reaching the channel (21) applies pressure onto the inner surface of the rim (17) with the effect of the centrifugal force and quickly passes to the water distribution line (14, 114) by means of the orifice (19, 119).

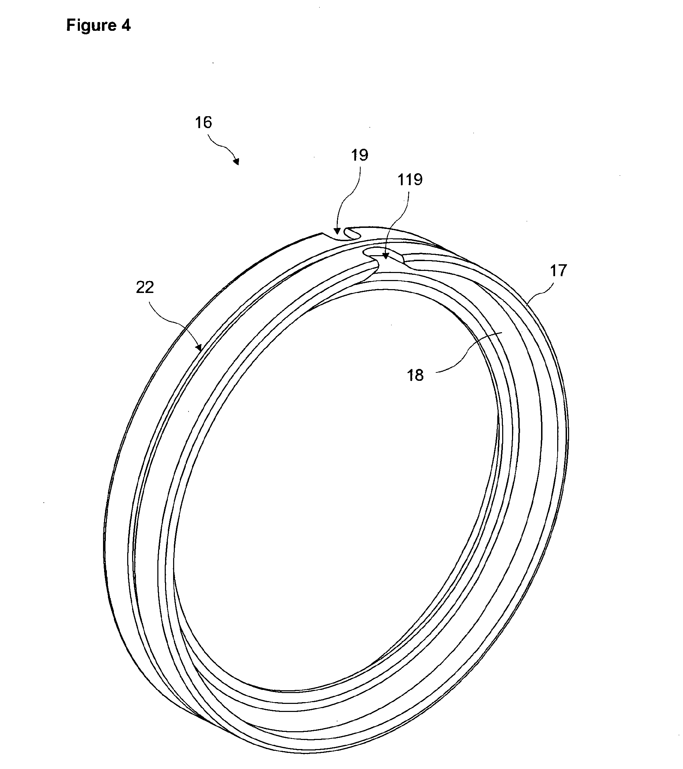

In another embodiment of the present invention, the separator (16) comprises a groove (22) which extends all around the outer surface of the rim (17) and which, by means of an o-ring mounted thereon, provides the separator (16) to be attached to the inner surface of the housing (6) in a leak-proof manner at the same level with the slots (8) (Figure 4, Figure 5, Figure 6).

In the washing machine (1) of the present invention, in case of the unbalanced load detected by the control unit (12), water in an amount to compensate the unbalanced load and decrease the effect thereof to a minimum is taken from the mains and delivered to the related divisions (15, 115) in the slots (8) disposed between the gaskets (7) placed at the portion wherein the shaft (4) rotating the drum (2) is supported by means of the water inlet lines (13, 113) and then is transferred to the chambers (10, 110) from the divisions (15, 115) by means of the water distribution lines (14, 114). The separator (16) separating each slot (8) into two divisions (15, 115) provides that the chambers (10, 110) are supplied from a single slot (8) almost independently from each other, utilization of separate slots (8) for supplying each chamber (10, 110) is no more required and thus cost is decreased by using fewer number of slots (8) and gaskets (7) in comparison with the state of the art embodiments. By means of the separator (16), water in an amount that does not affect the unbalancing process passes from one division (15, 115) to the other division (15, 115) in the slot (8) through the gap (G) between the separator (16) and the hub (5). Thus, one slot (8) serves as two separate slots (8), two chambers (10, 110) in one drum baffle (9) are supplied from a single slot (8), number of slots (8) and thus of costly gaskets (7) the production of which is difficult is decreased, saving is provided by using fewer number of gaskets (7) instead of a larger number of gaskets (7) and low-cost separators (16).

It is to be understood that the present invention is not limited by the embodiments disclosed above and a person skilled in the art can easily introduce different embodiments. These should be considered within the scope of the protection postulated by the claims of the present invention.

## Claims

1. A washing machine (1) **comprising** a drum (2) rotated by a motor around the horizontal axis, a tub (3) wherein the drum (2) moves, a shaft (4) that transfers the movement received from the motor to the drum (2), a hub (5) disposed at the center of the rear wall of the tub (3) around the horizontal axis, which is stationary together with the tub (3) and wherein the shaft (4) is supported, a cylindrical housing (6) disposed at the center of the rear wall of the drum (2) around the horizontal axis, surrounding the hub (5) concentrically and rotating together with the drum (2), more than one ring-shaped gasket (7) placed between the cylindrical inner surface of the housing (6) and the cylindrical outer surface of the hub (5), arranged one after the other and in parallel to each other, more than one slot (8) disposed between the gaskets (7), at least one drum baffle (9) disposed at the inner surface of the drum (2), more than one chamber (10, 110) placed in the drum baffle (9) and wherein water is delivered according to the unbalanced load status, at least one water inlet valve (11, 111) which provides water to be delivered in necessary amount to the chambers (10, 110) from the water mains for the balancing process, a control unit (12) which opens/closes the water inlet valves (11, 111) by determining the amount and position of the unbalanced load when the unbalanced load is detected and which determines how much water should be delivered into which baffle (9) and chamber (10, 110),
**characterized in that**
- at least two water inlet lines (13, 113) opening into the slot (8) by passing through the hub (5) and which are stationary together with the tub (3), one end of each thereof connected to the water inlet valves (11, 111) and the other ends to the slot (8),
- at least two water distribution lines (14, 114), one end of each thereof connected to the slot (8) and the other ends to the chambers (10, 110) and which provide water to be delivered from the slot (8) to the chambers (10, 110),
and
- at least one separator (16) which is placed between the two gaskets (7), which extends into the slot (8), which separates the slot (8) into at least two divisions (15, 115), which provides water received from the first water inlet line (13) to be delivered to the first division (15) and to the first water distribution line (14) and water received from the second water inlet line (113) to be delivered to the second division (115) and to the second water distribution line (114) and thereby which provides the chambers (10, 110) to be supplied from separate divisions (15, 115) in the same slot (8) almost independently from each other.

2. A washing machine (1) as in Claim 1, **characterized in that** the separator (16) comprises a ring-shaped rim (17) having an outer surface which is fixed to the cylindrical inner surface of the housing (6) between the gaskets (7) and which rotates together with the housing (6) and a ring-shaped extension (18) which is connected to the inner surface of the rim (17) and which extends, in the radial direction, towards the area in between the water inlet lines (13, 113) opening to the slot (8) such that a gap (G) remains between the cylindrical outer surface of the hub (5) and the extension (18).

3. A washing machine (1) as in Claim 1 or 2, **characterized in that** the separator (16) comprises at least two orifices (19, 119) which are disposed in the rim (17) and which overlap with the water distribution lines (14, 114), which provide water sticking onto the inner surface of the rim (17) by the effect of the centrifugal force to reach the water distribution lines (14, 114) by passing through the rim (17) in the radial direction.

4. A washing machine (1) as in any one of the above claims, **characterized in that** the separator (16) comprises more than one blade (20) which extends into the divisions (15, 115) from both sides of the extension (18) in the inner side of the rim (17), which rotates together with the rim (17) and the extension (18), which increases the centrifugal force affecting water heading toward the inner surface of the rim (17) during the rotational movement.

5. A washing machine (1) as in Claim 4, **characterized by** the separator (16) having the blades (20) disposed at both sides of the extension (18) and extending towards the inner surface of the rim (17) in the radial direction.

6. A washing machine (1) as in Claim 4, **characterized by** the separator (16) having the blades (20) disposed at both sides of the extension (18) and extending towards the inner surface of the rim (17) in a curved manner in comparison with the radial direction.

7. A washing machine (1) as in any one of the above claims, **characterized in that** the separator (16) comprises two channels (21) which are formed by cutting-out the portions of the blades (20) near the inner surface of the rim (17) or by producing the blades (20) in recessed form at both sides of the extension (18) facing the divisions (15, 115), which extend all around the inner surface of the rim (17).

8. A washing machine (1) as in any one of above claims, **characterized in that** the separator (16) comprises a groove (22) which extends all around the outer surface of the rim (17) and which, by means of an o-ring mounted thereon, provides the separator (16) to be attached to the inner surface of the housing (6) in a leak-proof manner.

## Patentansprüche

1. Waschmaschine (1), **umfassend** eine Trommel (2), die von einem Motor um die horizontale Achse gedreht wird, einen Waschbehälter (3), in dem sich die Trommel (2) bewegt, eine Welle (4), die die vom Motor empfangene Bewegung auf die Trommel (2) überträgt, eine Nabe (5), die in der Mitte der Rückwand des Waschbehälters (3) um die horizontale Achse herum angeordnet ist und zusammen mit dem Waschbehälter (3) stationär ist und in der die Welle (4) gelagert ist, ein zylindrisches Gehäuse (6), das in der Mitte der Rückwand der Trommel (2) um die horizontale Achse herum angeordnet ist und die Nabe (5) konzentrisch lagert und sich zusammen mit der Trommel (2) dreht, mehrere ringförmige Dichtungen (7), die zwischen der zylindrischen Innenfläche des Gehäuses (6) und der zylindrischen Außenfläche der Nabe (5) angeordnet sind und eine nach der anderen und parallel zueinander angeordnet sind, mehrere Schlitze (8), die zwischen den Dichtungen (7) angeordnet sind, wenigstens ein Trommelleitblech (9), das an der Innenfläche der Trommel (2) angeordnet ist, mehrere Kammern (10, 110), die im Trommelleitblech (9) angeordnet sind und in die entsprechend des Zustands eines Ladungsungleichgewichts Wasser geleitet wird, wenigstens ein Wassereinlassventil (11, 111), das dafür sorgt, dass Wasser von der Wasserversorgung in der für den Ausgleichvorgang benötigten Menge an die Kammern (10, 110) geleitet wird, eine Steuereinheit (12), die die Wassereinlassventile (11, 111) öffnet/schließt, indem sie die Menge und die Position des Ladungsungleichgewichts bestimmt, wenn das Ladungsungleichgewicht erkannt wird, und bestimmt, wie viel Wasser in welches Leitblech (9) und welche Kammer (10, 110) geleitet werden soll.
**dadurch gekennzeichnet, dass**
- sich wenigstens zwei Wassereinlassleitungen (13, 113) in den Schlitz (8) hinein öffnen, indem sie durch die Nabe (5) verlaufen, und stationär zusammen mit dem Waschbehälter (3) sind, wobei ein Ende davon mit den Wassereinlassventilen (11, 111) und das andere Ende mit dem Schlitz (8) verbunden ist,
- wenigstens zwei Wasserverteilungsleitungen (14, 114) vorliegen, von denen ein Ende mit dem Schlitz (8) verbunden ist und das andere Ende mit den Kammern (10, 110), und die dafür sorgen, dass Wasser vom Schlitz (8) an die Kammern (10, 110) geleitet wird,
und
- wenigstens eine Trenneinrichtung (16), die zwischen den zwei Dichtungen (7) angeordnet ist und sich in den Schlitz (8) erstreckt, den Schlitz (8) in wenigstens zwei Abteilungen (15, 115) unterteilt und dafür sorgt, dass Wasser von der ersten Wassereinlassleitung (13) an die erste Abteilung (15) und an die erste Wasserverteilungsleitung (14) geleitet wird und Wasser von der zweiten Wassereinlassleitung (113) an die zweite Abteilung (115) und an die zweite Wasserverteilungsleitung (114) geleitet wird, und auf diese Weise dafür sorgt, dass die Kammern (10, 110) nahezu unabhängig voneinander von separaten Abteilungen (15, 115) im selben Schlitz (8) versorgt werden.

2. Waschmaschine (1) nach Anspruch 1, **dadurch gekennzeichnet, dass** die Trenneinrichtung (16) einen ringförmigen Rand (17) mit einer Außenfläche aufweist, die an der zylindrischen Innenfläche des Gehäuses (6) zwischen den Dichtungen (7) befestigt ist, und der sich zusammen mit dem Gehäuse (6) dreht, und eine ringförmige Verlängerung (18), die mit der Innenfläche des Randes (17) verbunden ist und sich in radialer Richtung zu einem Bereich zwischen den Wassereinlassleitungen (13, 113), die sich in den Schlitz (8) hinein öffnen, erstreckt, derart, dass ein Spalt (G) zwischen der zylindrischen Außenfläche der Nabe (5) und der Verlängerung (18) verbleibt.

3. Waschmaschine (1) nach Anspruch 1 oder 2, **dadurch gekennzeichnet, dass** die Trenneinrichtung (16) wenigstens zwei Mündungen (19, 119) umfasst, die im Rand (17) angeordnet sind und die Wasserverteilungsleitungen (14, 114) überlagern und dafür sorgen, dass Wasser, das an der Innenfläche des Randes (17) haftet, mittels Zentrifugalkraftwirkung die Wasserverteilungsleitungen (14, 114) erreicht, indem es in radialer Richtung durch den Rand (17) tritt.

4. Waschmaschine (1) nach einem der vorangehenden Ansprüche, **dadurch gekennzeichnet, dass** die Trenneinrichtung (16) mehrere Schaufeln (20) umfasst, die sich von beiden Seiten der Verlängerung (18) an der Innenseite des Randes (17) in die Abteilungen (15, 115) erstrecken und sich zusammen mit dem Rand (17) und der Verlängerung (18) drehen, was die Zentrifugalkraft erhöht, die auf das Wasser einwirkt, das sich während der Drehbewegung zur Innenfläche des Randes (17) bewegt.

5. Waschmaschine (1) nach Anspruch 4, **dadurch gekennzeichnet, dass** bei der Trenneinrichtung (16) die Schaufeln (20) auf beiden Seiten der Verlängerung (18) angeordnet sind und sich in radialer Richtung zur Innenfläche des Randes (17) erstrecken.

6. Waschmaschine (1) nach Anspruch 4, **dadurch gekennzeichnet, dass** bei der Trenneinrichtung (16) die Schaufeln (20) auf beiden Seiten der Verlängerung (18) angeordnet sind und sich im Vergleich zur radialen Richtung auf gekrümmte Weise zur Innenfläche des Randes (17) erstrecken.

7. Waschmaschine (1) nach einem der vorangehenden Ansprüche, **dadurch gekennzeichnet, dass** die Trenneinrichtung (16) zwei Kanäle (21) umfasst, die durch Ausnehmen der Abschnitte der Schaufeln (20) nahe der Innenfläche des Randes (17) oder durch Herstellen der Schaufeln (20) in auf beiden Seiten der Verlängerung (18), die den Abteilungen (15, 115) zugewandt sind, in vertiefter Form, und die sich um die gesamte Innenfläche des Randes (17) herum erstrecken.

8. Waschmaschine (1) nach einem der vorangehenden Ansprüche, **dadurch gekennzeichnet, dass** die Trenneinrichtung (16) eine Nut (22) umfasst, die sich um die gesamte Außenfläche des Randes (17) erstreckt und mittels eines daran angeordneten O-Rings dafür sorgt, dass die Trenneinrichtung (16) auf dichte Weise an der Innenfläche des Gehäuses (6) angebracht ist.

## Revendications

1. Une machine à laver (1) **comprenant** un tambour (2) tourné par un moteur autour de l'axe horizontal, une cuve (3) dans laquelle le tambour (2) se déplace, un arbre (4) qui transmet le mouvement reçu du moteur au tambour (2), un moyeu (5) disposé au centre de la paroi arrière de la cuve (3) autour de l'axe horizontal, qui est immobile comme la cuve (3) et dans lequel l'arbre (4) est supporté, un logement cylindrique (6) situé au centre de la paroi arrière du tambour (2) autour de l'axe horizontal, qui entoure le moyeu (5) de manière concentrique et tourne avec le tambour (2), plus d'un joint d'étanchéité (7) en forme d'anneau placé entre la surface intérieure cylindrique du logement (6) et la surface extérieure cylindrique du moyeu (5) et disposé l'un après l'autre et en parallèle l'un à l'autre, plus d'une fente (8) disposée entre les joints d'étanchéité (7), au moins un déflecteur de tambour (9) situé à la surface intérieure du tambour (2), plus d'une chambre (10, 110) située dans le déflecteur de tambour (9) et dans laquelle l'eau est envoyée selon l'état de la charge déséquilibrée, au moins une soupape d'entrée de l'eau (11, 111) qui permet la livraison de l'eau aux chambres (10, 110) en quantité nécessaire de l'alimentation en eau pour le processus de déséquilibrage, une unité de commande (12) qui ouvre/ferme les soupapes d'entrée de l'eau (11, 111) en déterminant la quantité et la position de la charge déséquilibrée lorsque la charge déséquilibrée est détectée et qui détermine combien d'eau il faut délivrer dans lequel déflecteur (9) et laquelle chambre (10, 110),
**caractérisée en ce que**
- au moins deux conduites d'entrée de l'eau (13, 113) qui s'ouvrent dans la fente (8) en passant à travers le moyeu (5) et qui sont immobiles comme la cuve (3), dont une extrémité de chacune est reliée aux soupapes d'entrée de l'eau (11, 111) et dont l'autre extrémité de chacune est reliée à la fente (8),
- au moins deux conduites de distribution de l'eau (14, 114) qui permet la livraison de l'eau de la fente (8) aux chambres (10, 110), dont une extrémité de chacune est reliée à la fente (8) et dont l'autre extrémité de chacune est reliée aux chambres (10, 110),
et
- au moins un séparateur (16) qui est placé entre les deux joints d'étanchéité (7), qui s'étend dans la fente (8), qui sépare la fente (8) en au moins deux divisions (15, 115), qui permet la livraison de l'eau reçue de la première conduite d'entrée de l'eau (13) à la première division (15) et la première conduite de distribution de l'eau (14) et permet la livraison de l'eau reçue de la seconde conduite d'entrée de l'eau (113) à la seconde division (115) et la seconde conduite de distribution de l'eau (114) et donc qui permet l'alimentation des chambres (10, 110) des divisions (15, 115) séparées dans la même fente (8) presque indépendamment l'une de l'autre.

2. Une machine à laver (1) selon la Revendication 1, **caractérisée en ce que** le séparateur (16) comprend un bord (17) en forme d'anneau qui présente une surface extérieure fixée à la surface intérieure cylindrique du logement (6) entre les joints d'étanchéité (7) et qui tourne avec le logement (6), et comprend une extension (18) en forme d'anneau qui est reliée à la surface intérieure du bord (17) et qui s'étend dans la sens radial vers la région entre les conduites d'entrée de l'eau (13, 113) s'ouvrant dans la fente (8) de telle sorte que un évidement (G) reste entre la surface extérieure cylindrique du moyeu (5) et la extension (18).

3. Une machine à laver (1) selon la Revendication 1 ou 2, **caractérisée en ce que** le séparateur (16) comprend au moins deux ouvertures (19, 119) qui sont arrangées dans le bord (17) et qui se chevaucher avec les conduites de distribution de l'eau (14, 114), qui permettent à l'eau adhérant sur la surface intérieure du bord (17) par l'effet de la force centrifuge d'atteindre les conduites de distribution de l'eau (14, 114) en passant à travers le bord (17) dans la direction radiale.

4. Une machine à laver (1) selon l'une quelconque des revendications précédentes, **caractérisée en ce que** le séparateur (16) comprend plus d'une pale (20) qui s'étend dans les divisions (15, 115) par les deux côtés de l'extension (18) dans le côté intérieur du bord (17), qui tourne avec le bord (17) et l'extension (18), qui augmente la force centrifuge affectant l'eau en direction de la surface intérieure du bord (17) pendant le mouvement de rotation.

5. Une machine à laver (1) selon la Revendication 4, **caractérisée par** le séparateur (16) qui présente les pales (20) qui sont disposées sur les deux côtés de l'extension (18) et qui s'étendent vers la surface intérieure du bord (17) dans la direction radiale.

6. Une machine à laver (1) selon la Revendication 4, **caractérisée par** le séparateur (16) qui présente les pales (20) qui sont disposées sur les deux côtés de l'extension (18) et qui s'étendent vers la surface intérieure du bord (17) de manière incurvée par rapport à la direction radiale.

7. Une machine à laver (1) selon l'une quelconque des revendications précédentes, **caractérisée en ce que** le séparateur (16) comprend deux canaux (21) qui sont formés en découpant les parties des pales (20) près de la surface intérieure du bord (17) ou en produisant les pales (20) en forme d'évidement sur les deux côtés de l'extension (18) en face des divisions (15, 115), qui s'étendent tout autour de la surface intérieure du bord (17).

8. Une machine à laver (1) selon l'une quelconque des revendications précédentes, **caractérisée en ce que** le séparateur (16) comprend une rainure (22) qui s'étend tout autour de la surface extérieure du bord (17) et qui, au moyen d'un joint torique monté sur celle-ci, permet au séparateur (16) d'être fixé à la surface intérieure du logement (6) de manière étanche.
